# EUROPEAN PATENT APPLICATION

(11) **EP 1 061 461 A1**
(43) Date of publication of application: **20.12.2000**
(21) Application number: 99304823.0
(22) Date of filing: 18.06.1999
(51) Int. Cl.: G06F 17/30

(54) **Database system**

(71) Applicant: BRITISH TELECOMMUNICATIONS public limited company, London EC1A 7AJ (GB)
(72) Inventor: The designation of the inventor has not yet been filed
(74) Representative: Roberts, Simon Christopher

(57) **Abstract**

A database system is disclosed for use in managing the requirements and design data produced during the engineering of a product such as a software system. The database system is capable of providing a link in the database between an element of the requirements data and an element of the design data. The links can be used to associate an individual requirement with the corresponding element of the design data and form part of the data structure in the database. When a database user is viewing or editing an element of data held in the database, the links enable the database system to display to the user the other elements of the stored data that are associated with the data being viewed. For example, if a user views a particular requirement they would also be able to identify the associated elements of the design data and to view those elements on giving an appropriate command.

## Description

The present invention relates to the organisation of data in a database system. The invention is particularly applicable to database system for managing data resulting from the engineering of a product. Such database systems are often referred to as requirements management database systems.

Complex products such as aircraft, large buildings or software systems have a defined production lifecycle. Such lifecycles start with the definition of the functions that the product must provide. This first stage is commonly referred to as requirements capture. The second stage involves the functional design of each part of the product to meet one or more of the specified requirements. The third stage is the implementation where the product is built for the first time. One or more subsequent stages involve the testing of the product to ensure that it meets the specified requirements.

At each stage of the lifecycle data is produced that defines the engineering tasks to be carried out at the given stage. The data may be represented in any convenient manner such as natural language text or in a formal specification language. Regardless of how the data is represented, it can be stored and organised in a requirements management database system. An example of such a system is DOORS (Trademark) provided by Quality Software & Systems Limited, Royal Albert House, Sheet Street, Windsor, SL4 1BE, United Kingdom.

As noted above, at the requirements capture stage the data represents each of the individual functions that are required to be performed by the product. At the design stage the data defines the functional design of each part of the product. The data from these first two stages may be stored in a requirements management database svstem such as the DOORS database system. Such database systems are capable of providing a link in the database between an element of the requirements data and an element of the design data. Such links can be used to associate an individual requirement with the corresponding element of the design data. The links form part of the data structure in the requirements database. When a database user is viewing or editing an element of data held in the database, the links enable the database system to display to the user the other elements of the stored data that are associated with the data being viewed. For example, if a user views a particular requirement they would also be able to identify the associated elements of the design data and to view those elements on giving an appropriate command.

The data produced for each stage in the lifecycle is used to ensure that the product resulting from the engineering process has the functions and performance set out in the original requirements (unless purposely deleted). The links in the database ensure that each feature of the finished product can be traced back to its origin in the requirements i.e. the links provide traceability. This ensures that, at each stage in the engineering of the product, the requirements set out in any previous stage are met and any modifications are properly controlled.

Some engineering lifecycles involve the production of one product for more than one customer or purpose. In this situation the product may have one set of requirements for one customer and a different set of requirements for another customer (although each set may have a significant number of common elements). In order to store the requirements data in an existing requirements management database system the requirements for each customer are reviewed to establish a superset of requirements that would satisfy all of each of the customers' requirements. The data representing each element of the superset is then linked in the database to the corresponding individual customer's requirement data from which it originated. Where the same requirement existed for more that one customer, more than one link may be established to the corresponding element in the superset. Each part of the subsequently produced functional design data is also linked in the database to the corresponding element of the requirements superset.

The formation of links in the manner described above results in two sets of links that provide traceability. One set between the original customer requirements and the superset and another set between the design data and the superset. The superset enables many sets of customer requirements to be linked to a single set of design data while keeping each set of customer requirements separate. This avoids the risk of confusion between customer requirements when engineering one product for a plurality of customers.

It will be appreciated that during the engineering lifecycle the requirements, functions or implementation of the product may change. Such changes are reflected by changes in the relevant data stored in the requirements database and therefore may affect the validity of one or more links between parts of the data. If this is the case the links have to be recompiled by the database system. This recompilation, especially when the data sets are large, is costly in terms of computer systems resources.

In some cases a product may be engineered in an iterative manner i.e. a product with reduced functionality can be delivered initially while products with more functions are delivered subsequently. Finally the fully functional product is delivered. This method of production is termed "Iterative Build". Such a delivery method is particularly useful when the products produced first are used as prototypes. In the requirements database for such an iterative build, the superset of requirements would represent only those functions that would be provided in the product to be released as the result of a even build. For subsequent builds, the superset would be modified, probably by the addition of further requirements.

After each build of an iterative build process, the superset has to be redefined to add, remove or modify the requirements contained in it. In addition, once the new super set of requirements has been created the links between the requirements, design data and the superset must be recompiled to include any changes made. Again, such recompilation, especially when the data sets are large, is costly in terms of computer systems resources.

According to one embodiment of the present invention there is provided a requirements management database for data associated with a production lifecycle comprising: means for storing a first set of data elements representing a first set of requirements; means for storing a second set of data elements representing a second set of requirements; means for storing a third set of data elements representing a functional design specification; means for assigning a unique identifier to each data element of each of said first, second and third sets of data elements; means for establishing a set of links arranged to directly associate identifiers of data elements from said first set and to directly associate identifiers of data elements from said second set with identifiers of data elements from said third set.

The unique identification of each element of each set of requirements enables direct links to be established between these elements and the associated elements of the design data without the need for linking via the superset of requirements. This enables each requirement to be directly traceable to its originating customer's requirements and reduces the number of links which would need recompiling in the event of a change. This corresponds to a reduction in the computer system resources needed to recompile the links when a change has been made.

Furthermore for an embodiment being used in an iterative build process, having a system without links via a superset allows a definition of the functions to be included in a particular build to be stored independently of the links between the requirements and the associated design data. Therefore, when the set of functions to be included in a build is changed, it is not necessary to recompile the links between the requirements and the design data. This saves further computer system resources.

Embodiments of the present invention are described below, by way of example only, with reference to the accompanying drawings in which:
Figure 1 shows a schematic view of a computer system embodying the invention;
Figure 2 is a functional block diagram of a requirements management database system implemented by the computer system of Figure 1;
Figure 3 is a diagrammatic representation of a production lifecycle;
Figure 4 shows the contents of a data store forming part of the computer system of Figure 1;
Figure 5 is a flow chart illustrating the processing of the data shown Figure 4;
Figure 6 shows the contents of the data store after the process of Figure 5;
Figure 7 shows an alternative view the contents of the data store after the process of Figure 5; and
Figure 8 is a schematic representation of a graphical user interface produced by the computer system shown in Figure 2.

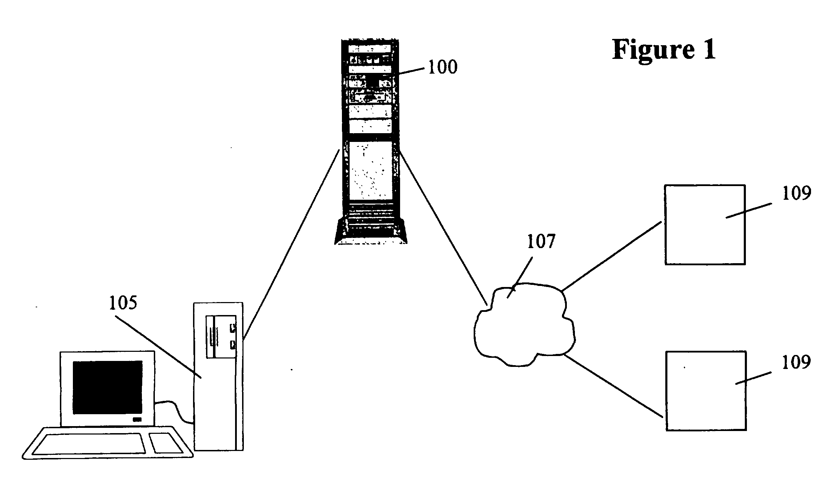

Figure 1 is a schematic of a computer system. The computer system includes a computer 100 which, as described below, is used to implement a requirements management database system. As will be described, the database system includes a data store. Access to the computer 100, and thus to the database system may be provided via a networked PC or other workstation 105. Remote access may also be provided using the Internet 107 and a workstation 109 running a suitably configured browser. The database system provides the users with access to stored data and, depending on the access privileges of the user, to modify or store new data. The data is the basis for requirements management and provides traceability from high-level user requirements through subsequent analysis, design, implementation and testing. At each stage new data may be added to the database system and individual requirements or groups of requirements may be added, removed or clarified. Any such additions, clarifications or other modifications are controlled so as to maintain the integrity of the data held by the database system.

The computer 100 is of conventional construction and includes input and output ports for connection to communications channels, a keyboard, a mouse, a central processing unit and a store in the form of a hard disk, random access memory and read only memory. By way of modification, the store may be distributed over a group of computers. The operating system and the application programs are held in the store. The operating system, in this embodiment, is the well known UNIX operating system. The application programs include a word processing program and a requirements management database application program. The requirements management database application program is the DOORS application with functionality added as described below.

The requirements management application program controls part of the store of the computer 100 and this part of the store functions as the data store. The requirements management application program together with the data store form a requirements management database system.

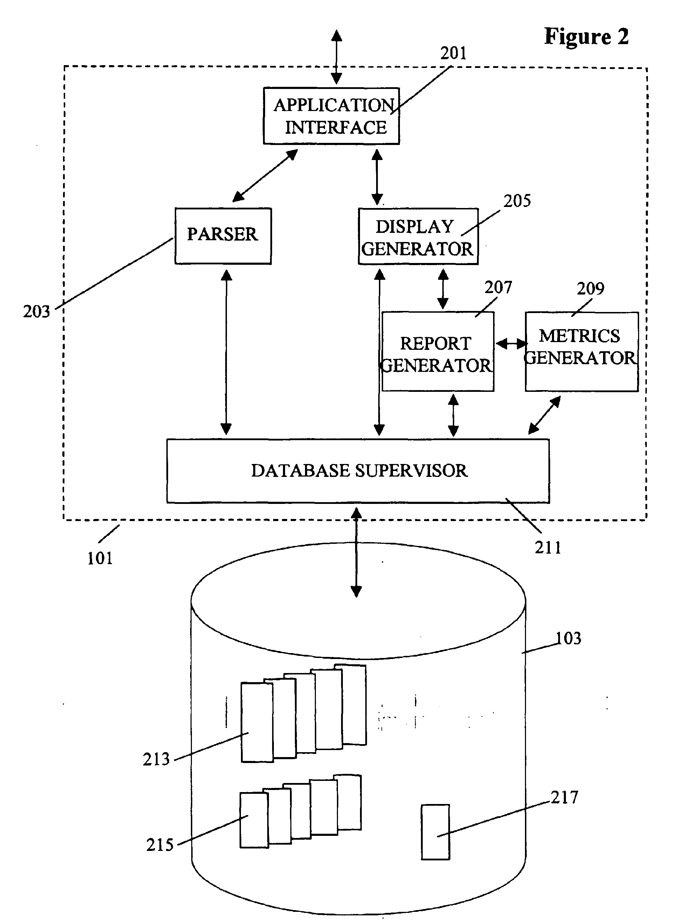

Referring now to Figure 2, there is shown a functional block diagram of the requirements management application program and the data store, indicated respectively by the reference numerals 101 and 103. The requirements database management application program 101 comprises a system interface 201 for controlling communications between the program 101 and other systems or programs. The interface is in communication with a parser 203 and a display generator 205. The parser 203 is arranged to input data from a user into the data store 103 and is responsible for the compilation of links between elements of the input data and will be described in further detail below. The display generator 205 is arranged to access the data store 103 in response to a user request and to retrieve the appropriate data for display to the user. The display generator 205 is also in communication with a report generator 207 and a metrics generator 209. The report generator 207 is operable in response to a request from the display generator 205 to generate reports on the data held in the data storage device 101. The metrics generator 209 provides the report generator 207 with statistical analysis or measurement of features of the data stored in the data storage device 101 when required for a given report. A database supervisor 211 provides an interface between the data store 103 and the parser 203 and generators 205, 207 and 209. The supervisor 211 is responsible for managing the storage of new data supplied from the parser 203 and for providing the data requested from the data store 103 by the generators 205, 207 and 209.

The data store 103 is arranged to hold data files 213 and associated link files 215. The data files 213 contain data elements associated with the requirements analysis, design, implementation and testing stages of the production lifecycle while the link files define links between data elements of one file and data elements of other files. The data store may also contain one or more scope files 217. The creation of the files 213, 215, and 217, their functions and interrelations will be described further below.

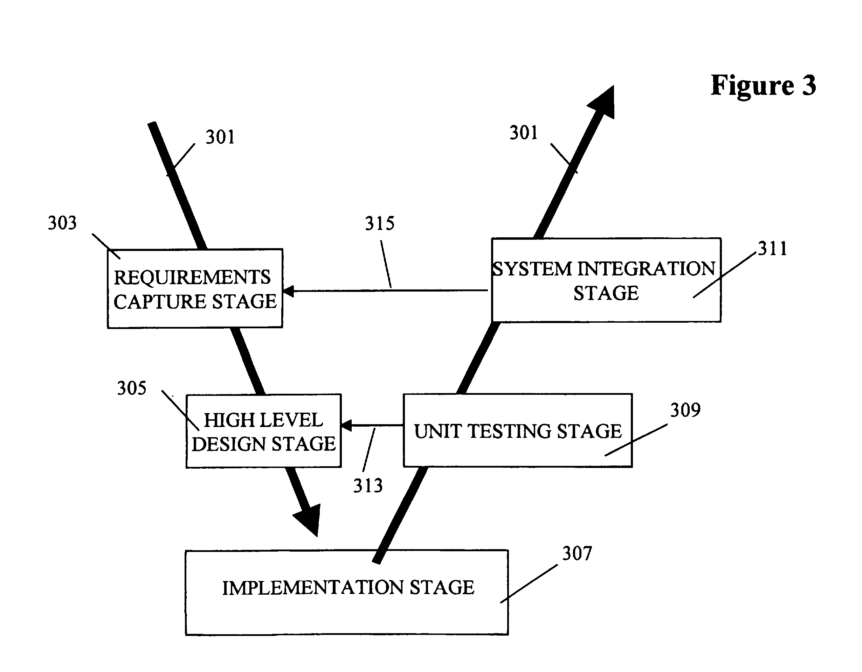

An example of a complex product which may be engineered using a production lifecycle is computer software. A process or lifecycle model is commonly used to represent such a production process for software. Examples of generally accepted models are the Waterfall Model or the "V" Model. These models define each of the stages in the lifecycle and their interrelationships. Figure 3 shows a simplified version of the "V" model comprising five stages at which tasks are carried out and corresponding data is created, consulted and/or modified. The large arrows 301 indicate the normal chronological ordering of the stages from the initial stages 303, 305 at which the system requirements and functions are specified to implementation 307 and then to the testing stages 309, 311.

The first of the initial stages is the requirements capture stage 303 during which the user's requirements for the functioning of the system are established by various known techniques. The result of this process is a full definition of the system in a document known as a Statement of Requirements Specification (SRS), which will be described in more detail below.

The second of the initial stages shown in Figure 3 is the high level design stage 305 during which the way the system must function in order to meet the requirements (as set out in the SRS) is specified. This may include definitions of how user interfaces will operate, the data which will be required, how the data will be manipulated and what the outputs of the software system should be. Such design is normally carried out at the functional level of the system rather than the implementation level and is encapsulated in a document called a Function Specification (FS) which will be described in more detail below.

Once the high level design stage has been completed the process can move on to the implementation stage 307 of the model (as noted above, the model shown in Figure 3 is a simplified version and therefore a number of further stages may be placed between those shown). During this stage the software code itself is created in accordance with the results of the previous stage as defined in the FS. This stage in the process is the lowest level of abstraction and represents the boundary between the initial (design) stages 303, 305 and the subsequent (testing) stages 309, 311.

The process then moves on to the first of the testing stages called the unit testing stage 309 during which each functional unit of the software (which may correspond to a software module) is tested for compliance with the FS. The test which is carried out is defined in a Unit Testing document (UT) which may have been created at the high-level design stage 305 or subsequently. If parts of the implemented software fail their testing this may result in redesign of those parts of the software. This is carried out by feedback into the high-level design stage 305 as indicated by arrow 313. The feedback 313 may result in re-implementation and re-testing.

Once the software passes the unit testing stage 309, i.e. the UT has been complied with, the process moves on to the next testing stage called the system integration stage 311 during which the software system as a whole is tested for compliance against the SRS. Again, the tests are defined in a document called the System Integration Test Specification (SIT) which may have been created during the first stage of the lifecycle or at some subsequent stage. If tests are failed at this stage this may result in feedback to the initial specification stage 303 as indicated by arrow 315. This may result in redesign, implementation, unit testing and further integration testing. Once the SIT has been complied with the system can normally be released to the user customer.

As noted above, during the lifecycle illustrated in Figure 3 at least four types of documents are produced namely SRSs, FSs, UTs and SITs. The first document to be produced will be the SRS and consequently this will be the first to be entered into the requirements management database 103. The SRS, in this embodiment, is a word processor document and comprises a sequence of paragraphs and headings, each paragraph describing one element of the requirements data and being organised together with similar elements under appropriate headings. While the SRS is under control of the word processing application program and thus in the word processor environment, some pre-processing may need to be carried out to ensure that the text of the document is in an appropriate format for capture into the database 103. In the present embodiment these processes are carried out manually. However, it will be clear to the person skilled in the art that some or all of these processes could be carried out by macros or other suitable automatic scripts and in some cases pre-processing may not be needed. The pre-processing includes trimming unnecessary appendices from the document, ensuring that paragraphs are fully separated, converting tables to text and ensuring that automatic point or paragraph numbering is switched off or removed. Once the document has been pre-processed, it is saved in a text format and transferred under the control of the database application program 101 into the data store 103, and hence into the database environment. The transfer is effected by an FTP (File Transfer Protocol) instruction.

When the SRS is in the database environment a capture process is initiated which comprises two main stages. In the first stage a new file is created in the data store 103 to hold the captured SRS and a unique name e.g. SRSA is assigned to the file. In the second stage the process steps through the SRS and assigns a unique identifier to each part of the SRS (i.e. each paragraph defining an individual requirement). Each identifier is of the form:
SRSA-SRS-nnn where "SRSA" is the file identifier which is unique to the SRS currently being captured; "SRS" denotes that the requirement is from an SRS (this is useful where the origin if the requirement can not be identified from the file identifier); and "nnn" is a unique number assigned in sequence during the capture process to each individual requirement (element). The result is that each element in the SRS is uniquely identifiable within the data store 103 and at any time can be traced to the originating SRS using the associated identifier. Once the capture process 28 is complete the new SRS file is stored in this form in the data store 103. The file comprises blocks of text each defining particular requirements data, each data element being assigned a unique identifier.

The SRS stored in the data store 103 defines one set of requirements, which defines the software system for one customer. However, when the software system being engineered will be for one or more customers, one or more further SRSs are created and entered into the Requirements Management data store 103. These further SRSs are processed in the same way as SRSA above and will also be assigned a unique label e.g. SRSB etc. Each requirement in SRSB will be stored as a data element having an identifier of the form:
SRSB-SRS-nnn.

As noted above, with reference to Figure 3, the next document in the lifecycle is the FS produced in the high-level design stage 305. The FS is structured in a similar manner to an SRS in that it comprises a sequence of paragraphs and headings, each paragraph describing one element of the functional specification and being organised together with similar elements under appropriate headings. However the FS differs in that each element includes the element identifier of the requirement which the given FS element satisfies. For example requirement:
SRSA-SRS-123 - The XXX shall do AAA

May result in the FS element:
FSA-FS-456 - How the XXX does AAA [SRSA-SRS-123].

The inclusion of the reference of the corresponding requirement indicates that the element of the FS defines at least part of the functionality that would satisfy the corresponding requirement. As a matter of syntax the cross-reference is enclosed in square brackets. It should be noted that a single requirement might be satisfied by more than one FS element. Similarly, one FS element may satisfy more than one requirement either completely or partially. In this case the two or more relevant cross-references are written (in full) in the same pair of square brackets and separated with commas.

As noted above with reference to Figure 3, further documents such as an SIT and a UT are created during production lifecycle. Again, these documents have the same basic structure as the FS or SRSs but include additional references in a similar manner to the FS. Each UT part includes references to the elements of the FS against which each unit of the software system is verified. Similarly, each SIT part includes references to the elements of the SRS against which the complete software system is verified. Continuing the example above, corresponding elements from the UT and SIT are as follows:
UTA-UT-135 - Verify that the XXX does AAA [FSA-FS-456]
SITA-SIT-246 - Verify that the XXX does AAA and BBB [SRSA-SRS-123, SRSB-SRS-321].

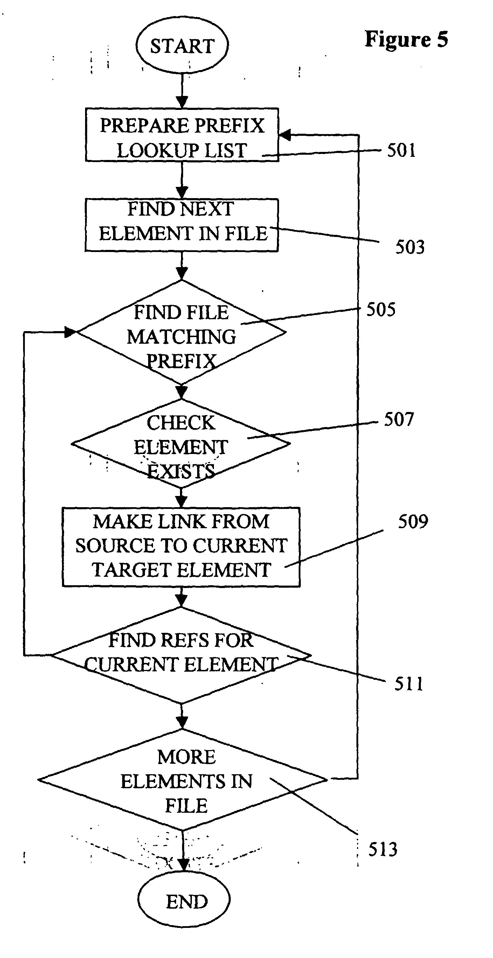

Once the FS, UT and SIT are produced (in the word-processing environment) they are captured in the requirements database as described above in the same manner as each SRS. Figure 5 is a representation of such a set of documents captured in the database 103, which correspond to the examples given above. The documents comprise SRSA 401, SRSB 503, FSA 405, UTA 507 and SITA 409 (there is also a document called SS 411, which will be described in more detail below).

Software production is often carried out incrementally, i.e. by iterative build, so that after the initial release new versions or updates are released from time to time. This may be as a result of bug fixes, the incorporation of new functionality or the staged production and release of a large system. The result of this is that each release may be made up of parts of the software from previous releases and new software. In the present embodiment, the parts that form a particular release are recorded in a file called a Scope Statement (SS). Each release or version of the software has an entry in the SS that indicates which FS elements need to be implemented to complete the particular version of the software. For the above example only the FS element FSA-FS-123 is included in the current version (Build 4a.1) and the SS 411 refers only to this element identifier.

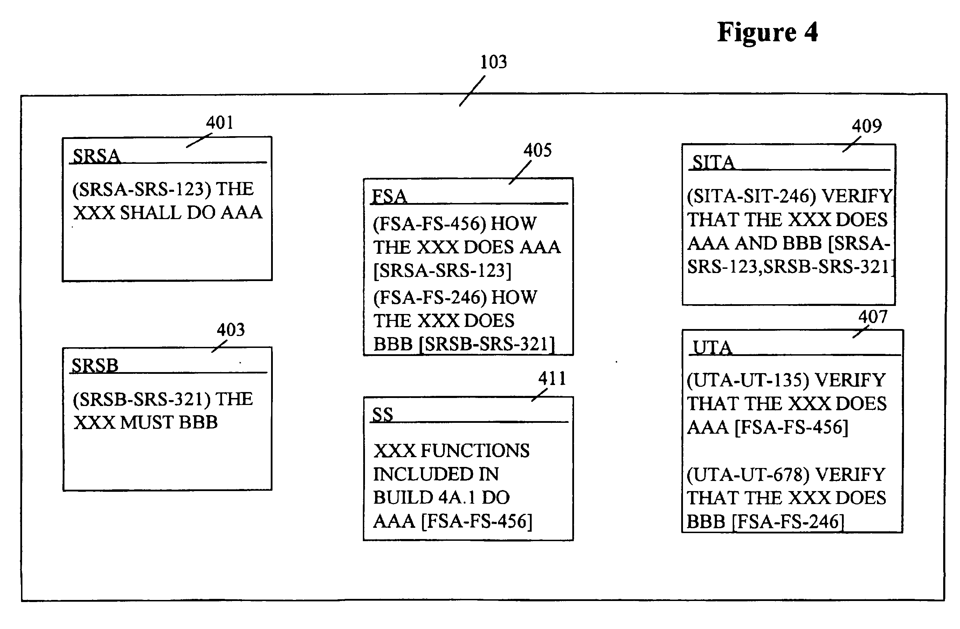

With reference to Figure 4, when at least two types of document, for example an SRS and an FS, are present in the data store 103 a linking process 405 is initiated by a user of the system. The linking process 404 will be described in more detail below with reference to Figure 5. The linking process 405 starts with the selection of the source file from which links should be made to target files. Target files are those containing the elements referenced by elements of the source file. In the case of an SRS and an FS, the FS would be the source file and each SRS would be a potential target file.

In some cases parts may exist in a source file when there is no relevant corresponding part in any target module. One example of such an element arising is when, during the detailed design stage 305 the designers realise that some functionality is not specified in the SRS but should be assumed to be necessary bearing in mind the designers' knowledge of how the system should work. Similarly, at some point the customer may request extra or different functionality not specified in the SRS. Such customer request can be added to the FS but may not have a corresponding element in the SRS. If these additional elements were left in the FS without any indication of their origin this would reduce traceability and be potentially confusing to a user. An additional feature to the system described above copes with this situation by adding dummy cross-references. In the case of a designers assumption the word "assumption" is added in square brackets to the added element of the FS. Similarly in the case of an added customer requirement the letters "CR" and text indicating the origin of the request e.g. "from meeting of 2/8/98 with DB" is added to the relevant element in square brackets.

Referring now to Figure 5, the linking process commences with a step 501 in which the data store 103 is scanned and a list of element identifier prefixes (i.e. the first section, e.g. SRSA, of each file identifier) is extracted and placed in a lookup list. A pointer to the module that each prefix identifies is also added. Then a new file called a link file is created and is associated by name with the source file. Next, at step 503 the first element in the source file is identified. In the current example shown in Figure 4 this would be the element identified by FSA-FS-456 in the FS 405. The process then moves to step 505 in which the identified element is inspected for cross-references. If no cross-reference is found at step 505 then the error "cross-reference for element *<element identifier>* could not be found" is placed in the associated link file and the process moves to step 503. Similarly if a dummy cross-reference is found the process moves to step 503.

If an element identifier is found which in the example would be the reference SRSA-SRS-123 then the prefix (SRSA) of the reference is then used to identify the relevant file from the lookup table. Having identified the referenced file the process moves to step 507 in which the file (SRSA) is opened and a search conducted to establish whether or not the referenced element exists. If the element is found, the process moves to step 509. If the element is not found then an error message "target element *<element identifier>* could not be found in file *<target file>"* and the processing moves to step 507 to begin processing the next reference. However, if the target element is found a link between the FS element having the cross-reference SRSA-SRS-123 and the actual element referenced is entered into the associated link file.

Each entry in the link file has a standard format. The element in the source file from which the link is being made is noted first followed by the full element identifier of the target element. For example, the first line of the link set for FSA in the above example would be as follows:
456 is linked to SRSA-SRS-123.

Each link is entered in a separate line of the link file and every source file has an associated link file. Once the link file has been opened and the link entered the process moves to step 511. If there are further references in the current source element (e.g. the FS part partially or fully satisfies more than one SRS element), the process returns to step 505 and processes the next reference in the same way as the first (entering the links in the same link file). If there are no further references then the process moves to step 513 at which the next element in the source document i.e. FSA-FS-246 is identified and the process returns to step 503 to process this next element in the same manner as the first. If no further elements are identified at step 513 the process ends.

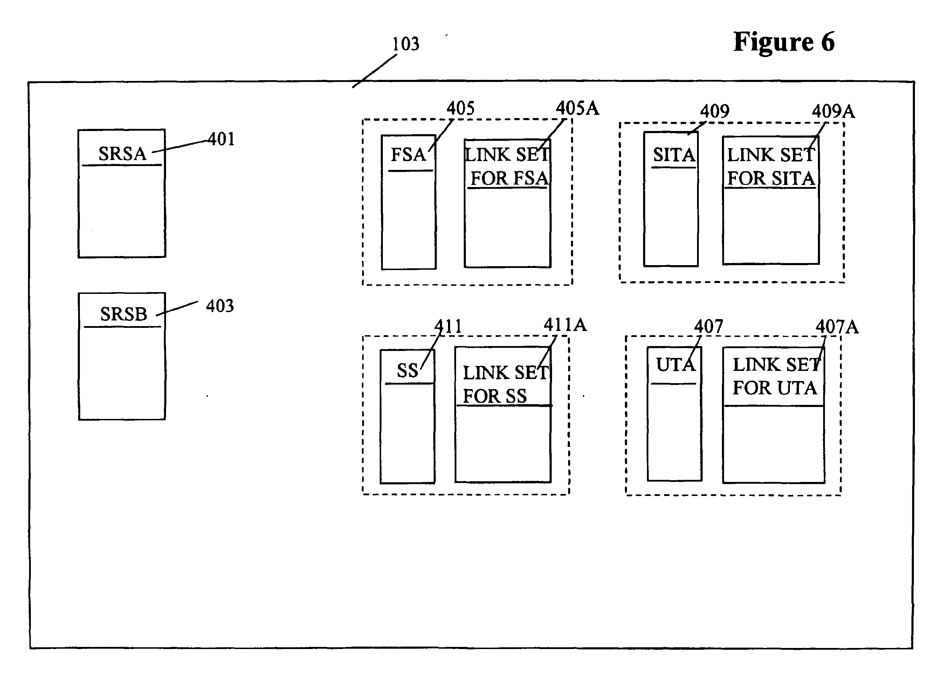

When the UT, SIT and SS are captured in the database 103 the process described above with reference to Figure 6 is repeated for the new files. In these cases the UT, SIT and SS are source files for the process and the FS and SRSs are the respective target files. When the processing of the SRSs, FS, UT, SIT and SS are complete each file (except the SRSs) will have an associated link file stored in the database 103 as shown in Figure 6. The SRSs do not have link files as they do not contain references to elements in other files and as such cannot act as a source file. The FS 405, UT 407, SIT 409 and the SS 411 have corresponding link files 405a, 407a, 409a and 411a. The FS link file comprises links to the SRSs 301, 303, the UT link file 407a comprises links to the FS 405, the SIT link file comprises links to the SRSs 401, 403 and the SS 411 comprises links to the FS 405.

Once each link set has been produced a post linking process may be initiated if necessary which, in this embodiment, is a manual process. In the process each of the newly created link files is inspected for error messages which may have resulted from missing target elements, missing references in source elements, incorrect reference syntax or incorrectly derived element identifiers. The correction process depends on the cause identified but may involve the correction of a simple typographical error. If a source or target element do not exist the cross-reference may be replaced manually with a suitable dummy reference as described above.

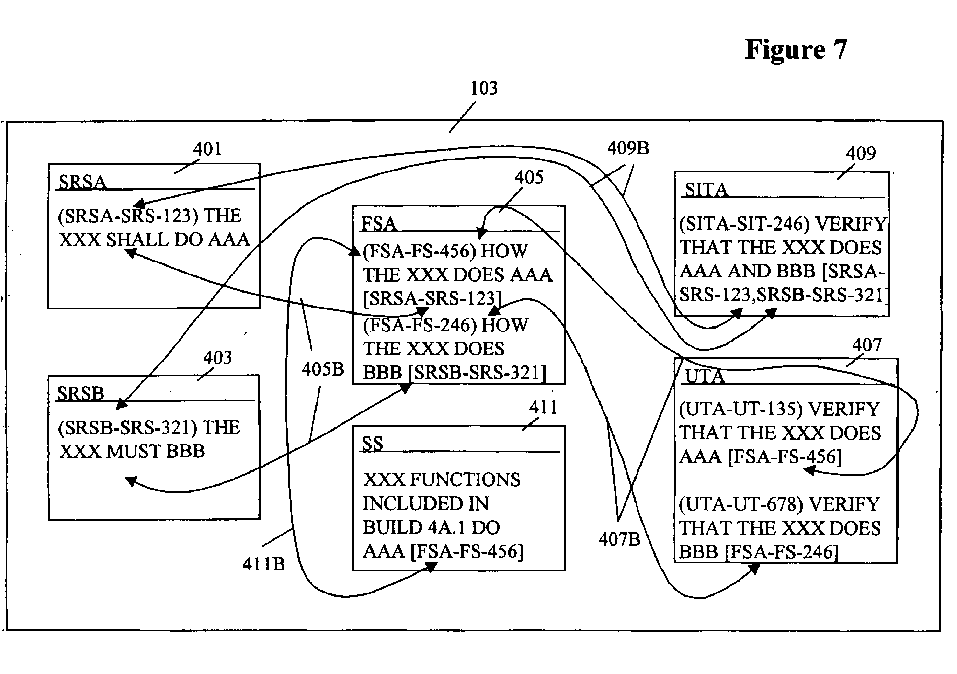

Figure 7 is a further illustration of the links contained in the link sets 405a, 407a, 409a and 411a in which the links in each of the link sets are illustrated by arrows. Arrows 405b represent the links from the element FSA-FS-456 to the element SRSA-SRS-123 and from the element FSA-FS-246 to the element SRSB-SRS-456. Arrows 407b represent the links from the element UTA-UT-135 to the element FSA-FS-456 and from the element UTA-UT-678 to the element FSA-FS-246. Arrows 409b represent the links from the element SITA-SIT-246 to both elements SRSA-SRS-123 and SRSB-SRS-321. Arrow 411b represents the link between SS entry for build 4a.1 and element FSA-FS-456.

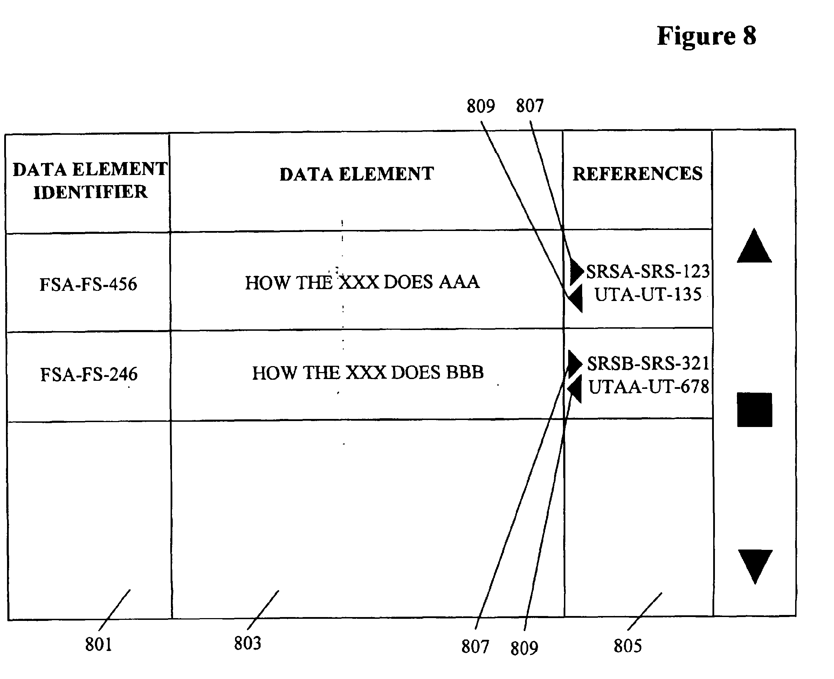

During the software production lifecycle the engineers and managers working with the software need to inspect the data captured in the database 103. In order to facilitate this a graphical user interface (GUI) is provided as shown in Figure 8. The left-hand column 801 contains the element identifier for each of the elements in a file being viewed. The central column 803 of the main window contains the text and headings of the element corresponding to the element identifier in the left-hand column 801. The right-hand column 805 contains a list of the element identifiers that are referred to by each element in the central column 803 and the element identifiers of those elements from other files that refer to the displayed element. Next to each cross-reference in the right-hand column 805, soft-buttons are provided. Each button is either a left facing arrowhead 807 or a right facing arrowhead 809. Left facing arrowheads 807 indicate a link to an element that the displayed element refers to. Conversely, right facing arrowheads 809 indicate a link to an element that refers to the displayed element.

The display generator 205 uses the link set associated with the file of the data element being displayed to show the links that the element refers to. The links to other elements which themselves refer to the displayed element are identified by a search through the link files associated with the other files. When one of the soft buttons 907, 909 is used (indicating that the wishes to inspect another element) the display generator 205 opens the relevant file and displays the referenced (or referring element) to the user. In this manner the user can navigate the links such as 405b, 507b, 409b, 411b illustrated in Figure 7, that have been created between the data elements contained in the database 103. The links provide traceablity between the data elements.

In addition to the features noted above the link files may be arranged to hold additional data. The data may provide management information such as the degree to which an FS complies with a corresponding SRS i.e. provides a measure of how many of the requirements have been met by the parts of the FS. The data may be used to provide such measures between any source/target pair in the database. Such information assists managers in establishing how a project is progressing, to estimate the time and effort to completion and to identify the parts of the project where extra resources may need to be applied. The additional data is held in an additional attribute provided in each line of the link file. This attribute can have one of a range of values defined as follows:
*full* - the source element fully complies with the target element;
*partial* - the source element partially complies with the target element i.e. full compliance requires partial compliance of other source elements;
*non -* the source element does not comply with the target element; and
*query-* there is a question as to whether or not the source element should or could comply with the target element.

The default value for the compliance attribute is *full* and is entered during step 509 of the linking process shown in Figure 5. Changes can be made to this value by a manual editing process once the capture process for a file is complete. Alternatively, the default may be overridden by placing the required entry into the text of an element next to the relevant target element identifier before the linking process is initiated. For example the element:
FSA-FS-456 - How the XXX does AAA [partial][SRSA-SRS-123].
would result in the compliance entry in the link set 405a being set to *partial,* thereby allowing the author of the FS to indicate that the element of the FS only complies with the element SRSA-SRS-123 in conjunction with one or more other elements of the FS. The compliance entries for each link can be collated to give an indication of the degree of compliance between one file and another or over a range of file up to the complete set. It should be noted that dummy references ensure that the degree of compliance can be determined more accurately as they also include a compliance attribute that can be set accordingly. Unlinked references can not have a compliance attribute and as such would always be treated and non-compliant.

The added functionality for the Doors system described above and not provided by the Doors system itself is provided using additional programs written in a language called the Doors Extension Language (DXL). However, it will be understood by those skilled in the art that the database functionality described above could be provided by other general database application programmed accordingly and is not limited in application to any particular product or application.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A requirements management database system for data associated with a production lifecycle comprising:
means for storing a first set of data elements representing a first set of requirements;
means for storing a second set of data elements representing a second set of requirements;
means for storing a third set of data elements representing a functional design specification;
means for assigning a unique identifier to each data element of each of said first, second and third sets of data elements;
means for establishing a set of links arranged to directly associate identifiers of data elements from said first set and to directly associate identifiers of data elements from said second set with identifiers of data elements from said third set.

2. A requirement management database system according to Claim 1 further comprising means for storing a set of said identifiers assigned to elements of said third sets;
means for establishing a set of links arranged to directly associate said set of identifiers with the corresponding identifiers of said third set.

3. A requirement management database system according to any preceding claim in which said means for assigning identifiers assigns identifiers comprising:
a first part identifying the set of elements to which the identifier is assigned;
a second part identifying the data element to which the identifier is assigned within the set of elements;
a third part indicating the type of data element to which the identifier is assigned.

4. A requirements management database system according to any preceding claim in which the means for establishing a set of links is operable to establish a further set of links to associate identifiers of data elements from a further set with data elements from said third set.

5. A requirements management database system according to any preceding claim further comprising means for associating one or more attributes such as a compliance attribute to one or more of said links.

6. A requirements management database system according to any preceding claim further comprising a graphical user interface comprising:
a first means for displaying data elements;
a second means for displaying the identifier associated with the data element displayed by the first means;
a third means for displaying associated identifiers;
and wherein the user interface is operable, in response to an input command, to cause the second means to display the data element associated with an identifier displayed by the third means.

7. A method of processing data in a database system for data associated with a production lifecycle comprising the steps of:
storing a first set of data elements representing a first set of requirements;
storing a second set of data elements representing a second set of requirements;
storing a third set of data elements representing a functional design specification;
assigning a unique identifier to each data element of each of said first, second and third sets of data elements;
establishing a set of links arranged to directly associate identifiers of data elements from said first set and to directly associate identifiers of data elements from said second set with identifiers of data elements from said third set.

8. A method of processing data in a database system according to Claim 7 further comprising the steps of:
storing a set of said identifiers assigned to elements of said third sets;
establishing a set of links arranged to directly associate said set of identifiers with the corresponding identifiers of said third set.

9. A method of processing data in a database system according to claims 7 or 8 wherein in said assigning step identifiers are assigned identifiers comprising:
a first part identifying the set of elements to which the identifier is assigned;
a second part identifying the data element to which the identifier is assigned within the set of elements;
a third part indicating the type of data element to which the identifier is assigned.

10. A method of processing data in a database system according to any of claims 7 to 9 further comprising the step of establishing a further set of links to associate identifiers of data elements from a further set with data elements from said third set.

11. A method of processing data in a database system according to any of Claims 7 to 10 further comprising the step of associating one or more attributes , such as a compliance attribute, to one or more of said links.

12. A method of processing data in a database system according to any of claim further comprising the steps of:
displaying data elements in a first area;
displaying, in a second area, the identifier associated with the data element displayed in the first area;
displaying associated identifiers in a third area;
and, in response to an input command, displaying in the second area the data element associated with an identifier displayed in the third area.
